(19) Europäisches Patentamt
European Patent Office
Office européen des brevets

(11) EP 1 528 092 B1

(12) **EUROPEAN PATENT SPECIFICATION**

(45) Date of publication and mention of the grant of the patent:
**23.11.2011 Bulletin 2011/47**

(51) Int Cl.:
*C09J 171/02* (2006.01) *C08G 65/00* (2006.01)
*C08L 71/02* (2006.01) *C08L 83/08* (2006.01)

(21) Application number: **04256620.8**

(22) Date of filing: **27.10.2004**

(54) **Adhesive composition**

Klebstoffzusammensetzung

Composition adhésive

(84) Designated Contracting States:
**DE FR GB**

(30) Priority: **27.10.2003 JP 2003365397**

(43) Date of publication of application:
**04.05.2005 Bulletin 2005/18**

(73) Proprietor: **Shin-Etsu Chemical Co., Ltd.**
**Chiyoda-ku,**
**Tokyo (JP)**

(72) Inventors:
- **Koshikawa, Hidenori**
**Matsuida-machi**
**Usui-gun**
**Gunma-ken (JP)**
- **Shiono, Mikio**
**Matsuida-machi**
**Usui-gun**
**Gunma-ken (JP)**

(74) Representative: **Stoner, Gerard Patrick et al**
**Mewburn Ellis LLP**
**33 Gutter Lane**
**London**
**EC2V 8AS (GB)**

(56) References cited:
**EP-A- 0 765 916**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 528 092 B1

## Description

This invention relates to adhesive compositions. Preferred embodiments may offer one or more of the following: yield relatively low or minimized outgassing during heat curing, adhere firmly to various types of substrates including metals and plastics, and cure into products having many advantages including one or more of solvent resistance, chemical resistance, heat resistance, low-temperature properties, low moisture permeation and electrical properties.

Fluoroelastomer compositions which can be cured by an addition reaction between alkenyl groups and hydrosilyl groups have been known for some time. JP-A 9-95615 proposes a similar composition further comprising an organopolysiloxane bearing hydrosilyl groups and epoxy and/or trialkoxysilyl groups as a third component. The latter composition can be cured by a short period of heating to give a cured product having many advantages including solvent resistance, chemical resistance, heat resistance, low-temperature properties, low moisture permeation and electrical properties. Such compositions are used in adhesive applications within a variety of fields where these properties are required.

It is pointed out that upon heat curing, these compositions give off gaseous impurities, known as an "outgassing" phenomenon, thus contaminating the surrounding parts which run into trouble. For instance, when the composition is used as a sealant in the head section of an ink jet printer, the ink channel is contaminated with outgases released from the composition upon heat curing, whereby the ink output through the channel is altered.

It is believed that the outgassing occurs because low-molecular weight components such as perfluoropolyether compounds having a low degree of polymerization and fluorinated organohydrogensiloxane volatilize off the composition when heated.

Preferred embodiments of the present invention may enable one to provide adhesive compositions which yield minimized outgassing during heat curing, adhere firmly to various types of substrates including metals and plastics, and cure into products having many advantages including solvent resistance, chemical resistance, heat resistance, Low-temperature properties, low moisture permeation and electrical properties.

The inventors have discovered that using a base polymer and a crosslinker in which the content of low-molecular weight components that cause outgassing is minimized, an adhesive composition is obtained which yields no or little outgassing upon heat curing.

The present invention provides an adhesive composition consisting of

(A) 100 parts by weight of a linear perfluoropolyether compound containing at least two alkonyl groups per molecule and having a weight loss of up to 0.3%,
(B) a fluorinated organohydrogensiloxane containing at least two silicon atom-bonded hydrogen atoms per molecule and having a weight loss of up to 2.0%, in an amount to provide 0.5 to 3.0 moles of Si-H groups per mole of alkeny groups in component (A),
(C) 0.1 to 500 ppm of a platinum group compound, calculated as platinum group metal atoms on the basis of the weight of component (A),
(D) 1 to 50 parts by weight of an organosiloxane containing per molecule at least one hydrogen atom directly bonded to a silicon atom and at least one group selected from among epoxy and trialkoxysilyl groups which is bonded to a silicon atom through a carbon atom or carbon and oxygen atoms and having a weight lose of up to 2.0%, and optionally (E) one or more ingredients selected from

i) plasticizers, viscosity modifiers and flexibilizers which have been subjected to vacuum treatment at a temperature of 100 to 300°C at a pressure of up to 1330 Pa for at least 1 hour;
ii) hydrosilylation catalyst regulators;
iii) inorganic fillers;
iv) adhesion promoters; and
v) silane coupling agents

When heat cured, the adhesive composition of the present invention produces minimized outgassing and adheres firmly to various types of substrates including metals and plastics. The oured product has many advantages including solvent resistance, chemical resistance, heat resistance, low-temperature properties, low moisture permeation and electrical properties.

DESCRIPTION OF THE PREFERRED EMBODIMENTS

It is noted that throughout the specification, Me stands for methyl and Ph stands for phenyl.

Component A

Component (A) which is used in the adhesive composition of the invention is a linear fluoropolyether compound containing at least two alkenyl groups per molecule and a divalent perfluoroalkyl ether structure in its backbone. The perfluoropolyether compound should have a weight loss or heat loss of up to 0.3%, and preferably up to 0.1%. If the perfluoropolyether compound has a weight loss of more than 0.3%, an adhesive composition containing the same gives off gases upon heat curing, causing unwanted contamination.

The "weight loss" is determined as follows. First, the tare weight ($W_1$) of a clean aluminum dish is measured using a precision balance (reading limit 0.1 mg). A sample of test material is then placed on the dish, and the weight ($W_2$) of the sample-containing aluminum dish is measured using the precision balance. The sample-containing aluminum dish is held in a thermostat oven at 105°C for 3 hours. After heating, the aluminum dish is taken out of the oven and allowed to cool down in a desiccator. After cooling, the weight ($W_3$) of the sample-containing aluminum dish is measured again using the precision balance. Then the percent weight loss of this sample is computed according to the formula:

$$[(W_3-W_1)/(W_2-W_1)] \times 100\% .$$

$W_1$: weight (g) of aluminum dish
$W_2$: weight (g) of aluminum dish + sample prior to heating
$W_3$: weight (g) of aluminum dish + heated sample

The linear fluoropolyether compound (A) should preferably have a molecular weight of at least 2,000, more preferably at least 4,000. Linear fluoropolyether compounds having a molecular weight of less than 2,000 are undesirable because they will volatilize upon heat curing, incurring outgassing and hence, contamination.

In the linear fluoropolyether compound (A), alkenyl groups are preferably those of 2 to 8 carbon atoms, especially 2 to 6 carbon atoms, terminated with a $CH_2$=CH- structure. Examples include vinyl, allyl, propenyl, isopropenyl, butenyl and hexenyl, with the vinyl and allyl being especially preferred.

With respect to its structure, the linear fluoropolyether compound (A) is preferably of the general formula (2).

$$CH_2=CH-(X)_p-(CF(CF_3)-CF_2-O)_q-(X')_p-CH=CH_2 \qquad (2)$$

Herein, X is $-CH_2-$, $-CH_2O-$, $-CH_2OCH_2-$ or -Y-NR-CO-, wherein Y is $-CH_2-$ or an o-, m- or p-dimethylsilylphenylene group of structural formula (3):

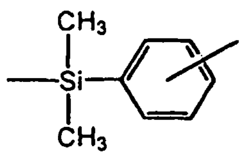

(3)

and R is hydrogen or a substituted or unsubstituted monovalent hydrocarbon group. X' is $-CH_2-$, $-OCH_2-$, $-CH_2OCH_2-$ or -CO-NR-Y'-, wherein Y' is $-CH_2-$ or an o-, m- or p-dimethylsilylphenylene group of structural formula (4):

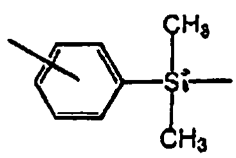

(4)

and R is as defined above. The subscript p is independently 0 or 1, and q is an integer of 0 to 400.

R is a hydrogen atom or a monovalent hydrocarbon group, preferably having 1 to 12 carbons, and more preferably 1 to 10 carbons. Examples of suitable hydrocarbon groups include alkyl groups such as methyl, ethyl, propyl, butyl, hexyl, cyclohexyl and octyl; aryl groups such as phenyl and tolyl; aralkyl groups such as benzyl and phenylethyl; and substituted monovalent hydrocarbon groups in which some or all of the hydrogen atoms are substituted with halogen

atoms such as fluorine. Inter alia, hydrogen, methyl, phenyl and aryl are preferred.

The alkenyl groups in the linear fluoropolyether compound (A) are those of 2 to 8 carbon atoms, especially 2 to 6 carbon atoms, having a $CH_2$=CH- structure at an end. Examples include vinyl, allyl, propenyl, isopropenyl, butenyl and hexenyl, with the vinyl and allyl being especially preferred.

Typical of the linear fluoropolyether compound (A) are linear perfluoropolyether compounds of the general formula (1):

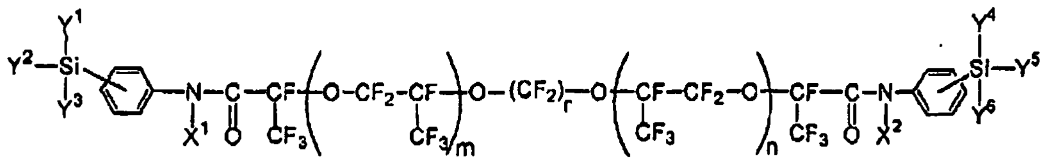
(1)

wherein $X^1$ and $X^2$ each are hydrogen, methyl, phenyl or aryl, at least two of $Y^1$, $Y^2$, $Y^3$, $Y^4$, $Y^5$ and $Y^6$ are alkenyl groups, the remaining Y's are substituted or unsubstituted monovalent hydrocarbon groups, r is an integer of 2 to 6, m and n each are an integer of 0 to 200, and the sum of m and n is 0 to 400, the compounds experiencing a weight loss of up to 0.3% when heated at 105°C for 3 hours. The linear perfluoropolyether compound of formula (1) with a weight loss of up to 0.3% is designated Polymer P, hereinafter.

The linear fluoropolyether compounds of formula (1) should desirably have a number average molecular weight of 4,000 to 100,000, more desirably 5,000 to 25,000, as measured by the method described in JP-A 9-95615.

In the linear fluoropolyether compounds of formula (1), the content of alkenyl groups is preferably 0.002 to 0.3 mol/100 g, more preferably 0.008 to 0.12 mol/100 g. An alkenyl content of less than 0.002 mol/100 g is undesirable because such a linear fluoropolyether compound may crosslink to an insufficient extent and become under-cured. An alkenyl content of more than 0.3 mol/100 g is undesirable because such a linear fluoropolyether compound may cure into a rubber elastomer having degraded mechanical properties.

Specific examples of the linear fluoropolyether compound having formula (1) are given below.

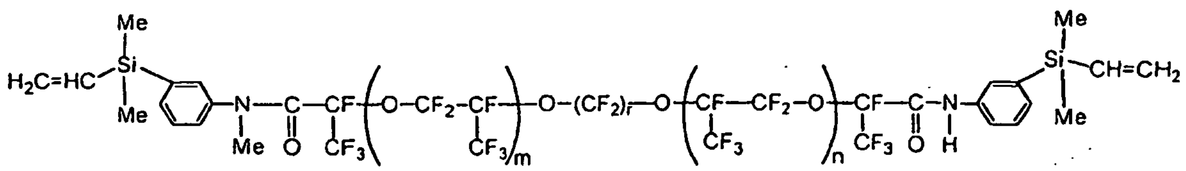

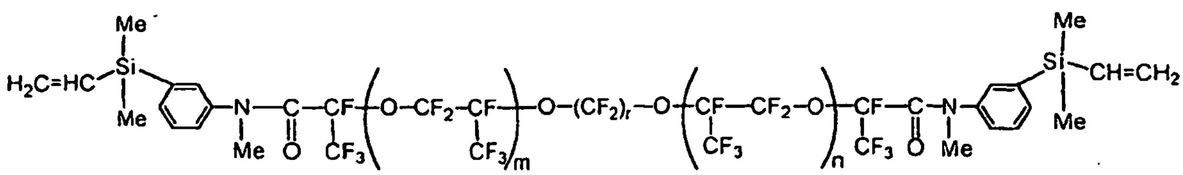

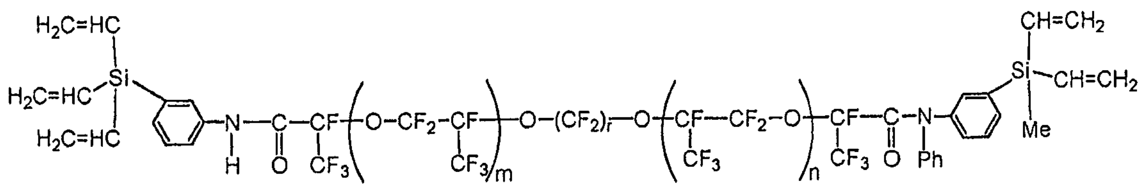

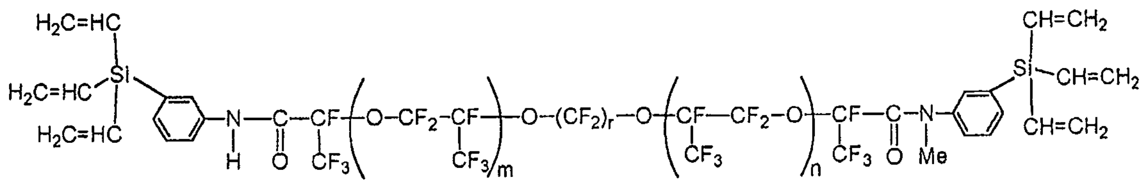

It is noted that m+n is an integer of 0 to 400, and r is an integer of 2 to 6.

The linear perfluoropolyether compounds of formula (1) include perfluoropolyether compounds having a relatively low degree of polymerization, of which those having a molecular weight of less than 2,000 become the cause of outgassing.

These linear fluoropolyether compounds may be used alone or in combination of two or more as component (A).

Then the linear perfluoropolyether compounds of formula (1) are subjected to the following Treatment 1 for removing low-molecular-weight fractions whereupon Polymer P suited as component (A) in the inventive composition is obtained.

Treatment 1: The linear perfluoropolyether compound of formula (1) is subjected to vacuum treatment at a temperature of 100 to 300°C, preferably 150 to 250°C and a pressure of up to 1330 Pa, preferably up to 665 Pa, for a period of at least 1 hour, preferably at least 5 hours.

The linear perfluoropolyether compound (A) should preferably have a viscosity at 23°C of 2,000 to 100,000 mPa·s, more preferably 3,000 to 50,000 mPa·s, and most preferably 3,500 to 20,000 mPa·s. This viscosity range ensures that when the composition is used for sealing, potting, coating and impregnating purposes, the composition maintains appropriate physical properties even in the cured state. For a particular application, an optimum viscosity may be selected within the above viscosity range.

Component B

Component (B) functions as a crosslinker and chain extender for component (A). It is a fluorinated organohydrogensiloxane containing at least two hydrogen atoms each directly bonded to a silicon atom per molecule and having a weight loss of up to 2.0%.

For good compatibility with component (A), dispersibility, and uniformity after curing, it is preferable for the fluorinated organohydrogensiloxane (B) to contain per molecule at least one fluorine-containing group selected from among monovalent perfluoroalkyl, monovalent perfluorooxyalkyl, divalent perfluoroalkylene and divalent perfluorooxyalkylene groups.

The fluorinated organohydrogensiloxane (B) should have a weight loss of up to 2.0%, and preferably up to 0.5%. If the fluorinated organohydrogensiloxane (B) has a weight loss of more than 2.0%, an adhesive composition containing the same gives off gases upon heat curing, causing unwanted contamination.

The fluorinated organohydrogensiloxane (B) should preferably have a molecular weight of 2,000 to 20,000, more preferably 4,000 to 10,000. Fluorinated organohydrogensiloxanes having a molecular weight of less than 2,000 are undesirable because they will volatilize upon heat curing, incurring outgassing and hence, contamination. Fluorinated organohydrogensiloxanes having a molecular weight of more than 20,000 are undesirable because they cause a substantial viscosity buildup which interferes with compounding operation.

In component (B), the fluorine-containing groups include those of the following formulas:

$$C_kF_{2k+1}-$$

wherein k is an integer from 1 to 20, and preferably from 2 to 10,

$$-C_gF_{2g}-$$

wherein g is an integer from 1 to 20, and preferably from 2 to 10,

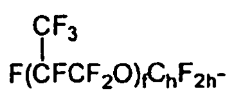

wherein f is an integer from 2 to 200, and preferably from 2 to 100, and h is an integer from 1 to 3,

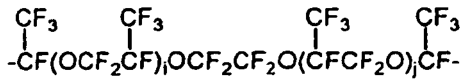

wherein i and j are each an integer of at least 1, and the average of the sum i+j is from 2 to 200, and preferably from 2 to 100, and

$$-(CF_2O)_1-(CF_2CF_2O)_s-CF_2-$$

wherein 1 and s are each an integer from 1 to 50.

Divalent linkages for connecting the perfluoroalkyl, perfluorooxyalkyl, perfluoroalkylene or perfluorooxyalkylene groups with silicon atoms include alkylene groups, arylene groups and combinations thereof, as well as any of these together with an intervening ether-bonding oxygen atom, amide linkage or carbonyl linkage. Preferred divalent linkages are of the general formula (5):

$$-(CH_2)_t-X''- \qquad (5)$$

wherein X" is $-OCH_2-$ or -Y"-NR'-CO- wherein Y" is $-CH_2-$ or a o, m or p-dimethylsilylphenylene group of structural formula (6):

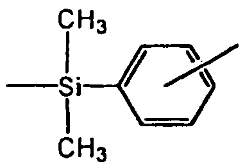

**(6)**

and R' is hydrogen or a substituted or unsubstituted monovalent hydrocarbon group; and t is an integer of 1 to 10, preferably 1 to 5.

Of the organohydrogensiloxanes having such fluorine-containing groups (B), typical compounds are given below. These compounds may be used alone or in admixture of two or more.

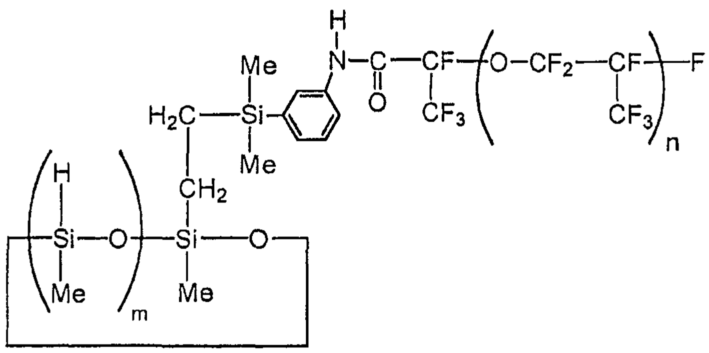

Herein, m = 3 or 4, and n = 20 to 40.

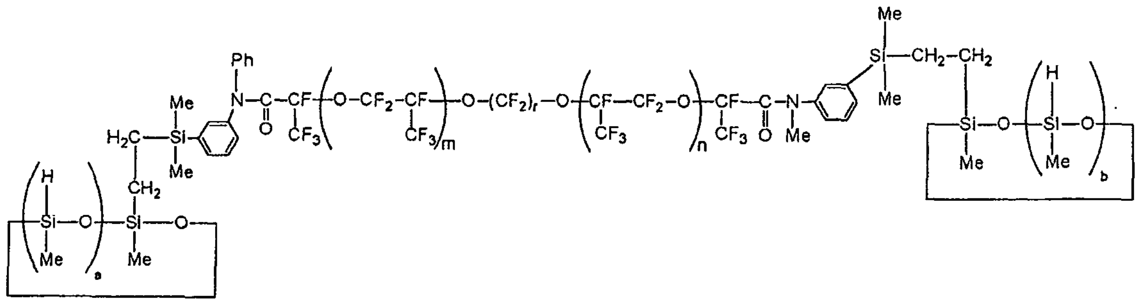

Herein, a = 3 or 4, b = 3 or 4, m = 10 to 20, n = 10 to 20, and r = 2 to 6.

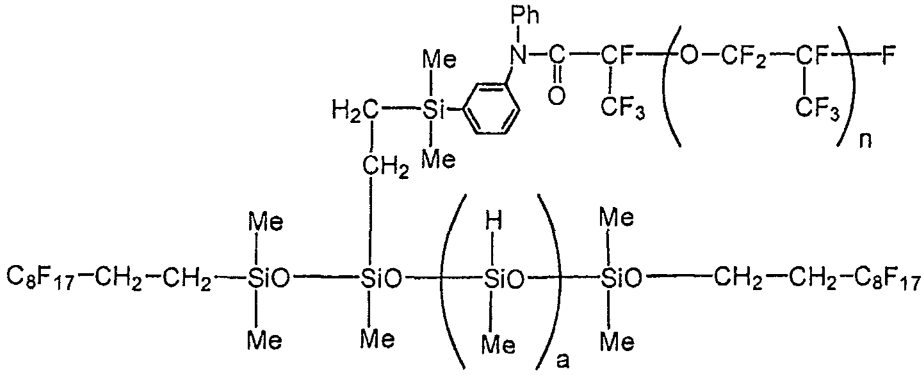

Herein, a = 10 to 20, and n = 20 to 40.

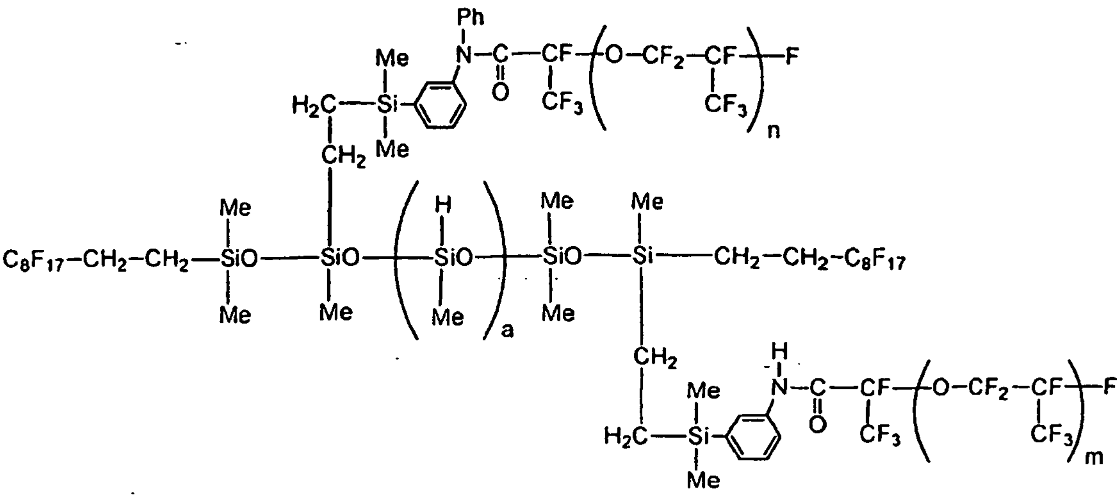

Herein, a = 10 to 20, m = 10 to 20, and n = 10 to 20. It is understood that all subscripts like "a" and "n" are integers in the indicated range.

Component (B) is compounded in an amount effective for curing component (A), specifically in an amount to provide 0.5 to 3.0 moles, preferably 0.8 to 2.0 moles, of hydrosilyl groups (i.e., Si-H groups) per mole of alkenyl groups (e.g., vinyl, allyl, cycloalkenyl) in component (A). If there are too few hydrosilyl (=Si-H) groups, a sufficient degree of crosslinking will not be reached, failing to provide a properly cured product. On the other hand, too many hydrosilyl groups will result in foaming during the curing process.

Component C

Component (C) is a platinum group compound serving as a catalyst for hydrosilylation reaction. The hydrosilylation catalyst promotes addition reactions between alkenyl groups in component (A) and hydrosilyl groups in component (B). Such catalysts are generally noble metal compounds which are expensive. Of these, platinum or platinum compound catalysts are often used because they are more readily available.

Exemplary platinum compounds include chloroplatinic acid, complexes of chloroplatinic acid with olefins such as ethylene or with alcohols or vinyl siloxane, and metallic platinum on supports such as silica, alumina and carbon. Known platinum group metal catalysts other than platinum compounds include rhodium, ruthenium, iridium and palladium compounds, specific examples of which are $RhCl(PPh_3)_3$, $RhCl(CO)(PPh_3)_2$, $Ru_3(CO)_{12}$, $IrCl(CO)(PPh_3)_2$ and $Pd(PPh_3)_4$.

If these catalysts are solid catalysts, they may be used in a solid state. However, to obtain a more uniform cured product, it is preferable to dissolve chloroplatinic acid or a complex thereof in a suitable solvent, and intimately mix the resulting solution with the linear polyfluoro compound (A).

Component (C) is used in a catalytic amount, specifically in an amount of 0.1 to 500 ppm, calculated as platinum group metal atoms on the basis of the weight of component (A).

Component D

Component (D) is an organosiloxane which is included to confer the inventive composition with sufficient self-adhesiveness. The organosiloxane bears on each molecule at least one hydrogen atom directly bonded to a silicon atom and at least one group selected from among epoxy groups and trialkoxysilyl groups which is bonded to a silicon atom through an intervening carbon atom or through intervening carbon and oxygen atoms. The organosiloxane should have a weight loss of up to 2.0%.

Preferred organosiloxanes are those which have also at least one monovalent perfluoroalkyl or monovalent perfluorooxyalkyl group bonded to a silicon atom through an intervening carbon atom or through intervening carbon and oxygen atoms.

The organosiloxane (D) should have a weight loss of up to 2.0%, and preferably up to 0.5%. If the organosiloxane has a weight loss of more than 2.0%, an adhesive composition containing the same gives off gases upon heat curing, causing unwanted contamination.

The organosiloxane (D) should preferably have a molecular weight of 2,000 to 20,000, more preferably 4,000 to 10,000. The presence of organosiloxanes having a molecular weight of less than 2,000 in the adhesive composition is undesirable because they will volatilize upon heat curing, incurring outgassing and hence, contamination. Organosiloxanes having a molecular weight of more than 20,000 are undesirable because they cause a substantial viscosity buildup which interferes with compounding operation.

The organosiloxane has a siloxane backbone which may be cyclic, linear or branched, or a combination of any of these. Organosiloxanes that can be used herein include those having the following average compositional formulas.

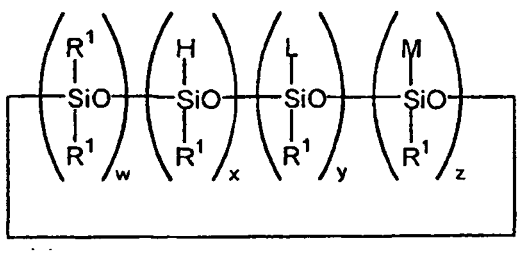

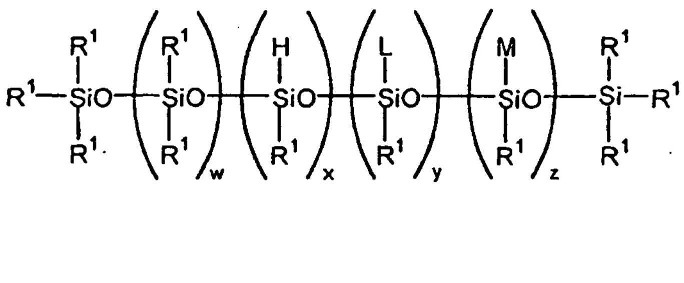

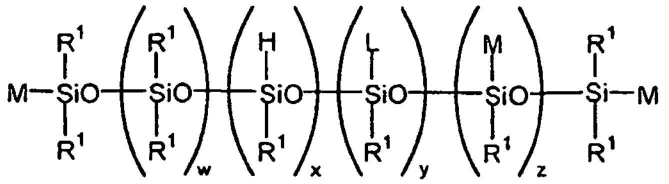

In these formulas, $R^1$ is a halogen-substituted or unsubstituted monovalent hydrocarbon group, L and M are as described below, the subscript w is an integer from 0 to 50, preferably from 0 to 20, x is an integer from 1 to 50, preferably from 1 to 20, y is an integer from 1 to 50, preferably from 1 to 20, and z is an integer from 0 to 50, preferably from 0 to 20. The sum of w+x+y+z is such an integer that the organosiloxane may have a molecular weight of 2,000 to 20,000.

$R^1$ is a halogen-substituted and unsubstituted monovalent hydrocarbon group, preferably of 1 to 10 carbons, and more preferably 1 to 8 carbons. Specific examples include alkyl groups such as methyl, ethyl, propyl, butyl, hexyl, cyclohexyl and octyl; aryl groups such as phenyl and tolyl; aralkyl groups such as benzyl and phenylethyl; and substituted forms of the foregoing monovalent hydrocarbon groups in which some or all of the hydrogen atoms are substituted with fluorine or other halogen atoms. Of these, methyl is especially preferred.

L represents an epoxy group and/or trialkoxysilyl group which is bonded to a silicon atom through an intervening carbon atom or through intervening carbon and oxygen atoms. Specific examples are given below.

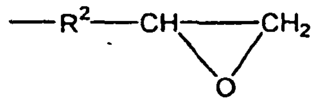

Herein, $R^2$ is a divalent hydrocarbon group with 1 to 10 carbons, and preferably 1 to 5 carbons, which may be separated by an oxygen atom, such as an alkylene or cycloalkylene group.

$-R^3-Si(OR^4)_3$

Herein, $R^3$ is a divalent hydrocarbon group with 1 to 10 carbons, and preferably 1 to 4 carbons, such as an alkylene group, and $R^4$ is a monovalent hydrocarbon group with 1 to 8 carbons, and preferably 1 to 4 carbons, such as an alkyl group.

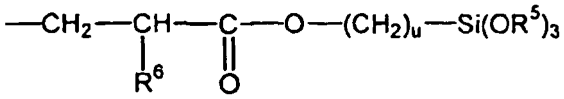

Herein, $R^5$ is a monovalent hydrocarbon group with 1 to 8 carbons, and preferably 1 to 4 carbons, such as an alkyl group, $R^6$ is hydrogen or methyl, and u is an integer from 2 to 10.

M preferably represents a structure of the general formula (7).

$-Z-Rf$ (7)

Herein Z is $(CH_2)_g$- , $-(CH_2)_i-OCH_2-$, or -Y'''-NR''-CO-, wherein Y''' is $-CH_2-$ or an o-, m- or p-dimethylsilylphenylene group of structural formula (8):

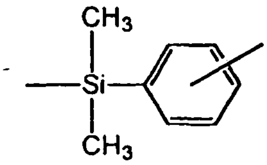

(8)

and R" is hydrogen or a substituted or unsubstituted monovalent hydrocarbon group, g and j each are an integer of 1 to 10, and preferably 1 to 5. Rf is a monovalent perfluoroalkyl or perfluorooxyalkyl group. Examples of the monovalent perfluoroalkyl or perfluorooxyalkyl group include those of the following general formulas:

$$C_kF_{2k+1}-$$

wherein k is an integer of 1 to 20, and preferably 2 to 10, and

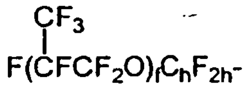

wherein f is an integer of 2 to 200, and preferably 2 to 100, and h is an integer of 1 to 3.

These organosiloxanes can be prepared through a partial addition reaction of a compound bearing an aliphatic unsaturated group (e.g., vinyl or allyl) and an epoxy group and/or trialkoxysilyl group and optionally, a compound bearing an aliphatic unsaturated group and a perfluoroalkyl or perfluorooxyalkyl group to an organohydrogenpolysiloxane bearing at least three silicon-bonded hydrogen atoms (Si-H groups) per molecule by a conventional method. The number of aliphatic unsaturated groups must be smaller than the number of Si-H groups.

In preparing the organosiloxane, the target substance may be isolated following reaction completion. Instead, the reaction mixture from which only unreacted feedstock and the addition reaction catalyst have been removed is also ready for use as the organosiloxane (D).

Specific examples of organosiloxanes which may be used as component (D) include those having the following structural formulas. These compounds may be used singly or as combinations of two or more thereof.

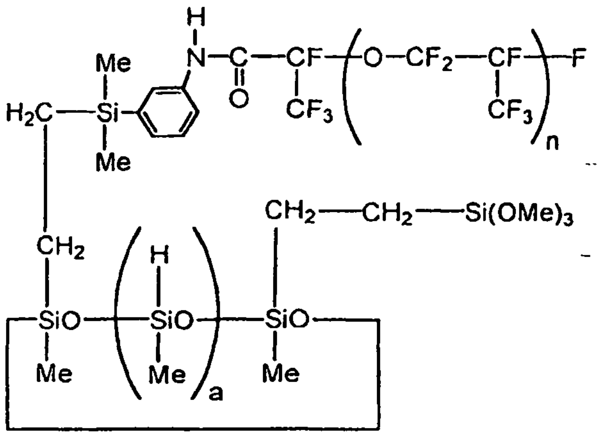

Herein, a = 2 or 3, and n = 20 to 40.

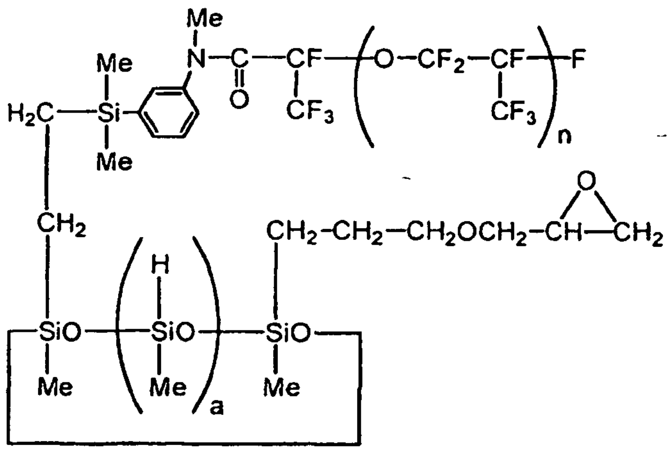

Herein, a = 2 or 3, and n = 20 to 40.

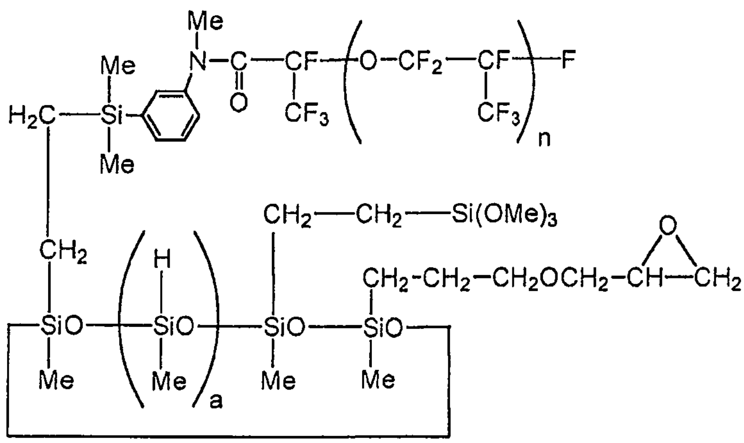

Herein, a = 1 or 2, and n = 20 to 40.

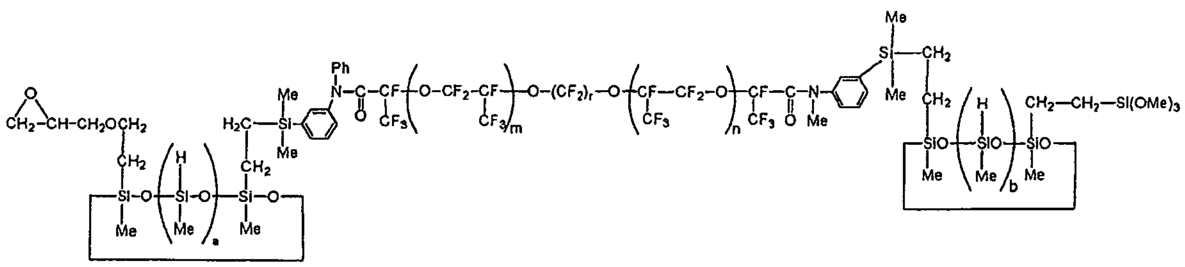

Herein, a = 2 or 3, b = 2 or 3, m = 10 to 20, n = 10 to 20, and r is 2 to 6. It is understood that all subscripts like "a" and "n" are integers in the indicated range.

Component (D) is included in an amount of 1 to 50 parts by weight, and preferably 10 to 40 parts by weight, per 100 parts by weight of component (A). Less than 1 part by weight of component (D) fails to achieve sufficient adhesion. On the other hand, at more than 50 parts by weight, the composition has a poor flow and less than desirable curability, and the resulting cured product has a diminished physical strength.

Other components

In addition to above components (A) to (D), optional ingredients may also be included in the inventive composition to increase its utility. Suitable additives include plasticizers, viscosity modifiers, flexibilizers, hydrosilylation catalyst regulators, inorganic fillers, adhesion promoters, and silane coupling agents. These additives may be included in any respective amounts that allow the objects of the invention to be attained and that do not compromise the properties of the composition or the cured product obtained therefrom.

For the plasticizers, viscosity modifiers and flexibilizers, polyfluoromonoalkenyl compounds of general formula (9) below and/or linear polyfluoro compounds of general formulas (10) and (11) below may be used.

$$Rf' - (X')_pCH{=}CH_2 \qquad (9)$$

In formula (9), X' is as defined above, p is 0 or 1, and Rf' has the following general formula:

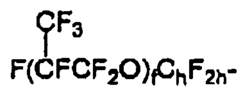

wherein f is an integer of 2 to 200, and preferably 2 to 100, h is an integer of 1 to 3, and the sum of f and h is smaller than the sum of m, n and r in formula (1) representing the linear perfluoropolyether compound.

$$Y\text{-}O\text{-}(CF_2CF_2CF_2O)_c\text{-}Y \qquad (10)$$

In formula (10), Y is a group of the formula $C_{k'}F_{2k'+1}$- , k' being an integer of 1 to 3, and c is an integer which is from 1 to 200, but smaller than the sum of m, n and r in formula (1) representing the linear perfluoropolyether compound.

$$Y\text{-}O\text{-}(CF_2O)_d(CF_2CF_2O)_e\text{-}Y \qquad (11)$$

In formula (11), Y is as defined above, d and e are each integers of 1 to 200, and the sum of d and e is smaller than the sum of m, n and r in formula (1) representing the linear perfluoropolyether compound.

Specific examples of polyfluoromonoalkenyl compounds of above general formula (9) include the following, wherein m satisfies the above-indicated condition.

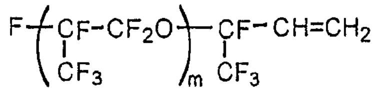

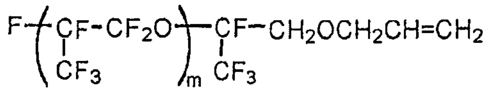

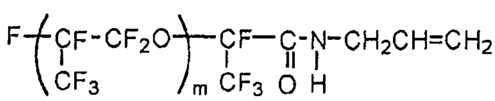

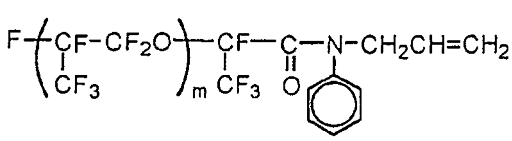

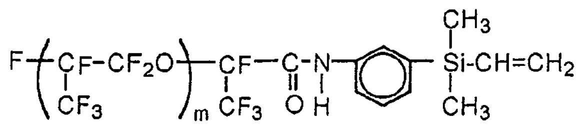

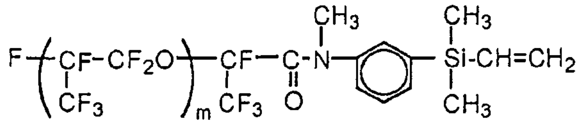

Specific examples of linear polyfluoro compounds of above general formulas (10) and (11) include the following.

$CF_3O\text{-}(CF_2CF_2CF_2O)_n\text{-}CF_2CF_3$

$CF_3\text{-}[(OCF_2CF_2)_n(OCF_2)_m]\text{-}O\text{-}CF_3$

In these formulas, m, n and the sum m+n satisfy the above-indicated conditions.

Polyfluoro compounds of formulas (9) to (11) may be included in the inventive composition in an amount of 1 to 300 parts by weight, and preferably 50 to 250 parts by weight, per 100 parts by weight of the linear perfluoropolyether compound (A). As with the linear perfluoropolyether compound (A), these polyfluoro compounds of formulas (9) to (11) desirably have a viscosity at 23°C within the range of 2,000 to 100,000 mPa.s.

Examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; the reaction products of chlorosilanes having monovalent fluorine-bearing substituents with acetylenic alcohols; 3-methyl-3-penten-1-yne, 3,5-dimethyl-3-hexen-1-yne and triallyl isocyanurate; polyvinylsiloxane, and organophosphorus compounds. The addition of these compounds helps to achieve a suitable curing reactivity and shelf stability.

Examples of inorganic fillers include reinforcing or semi-reinforcing fillers such as quartz powder, fused silica powder, diatomaceous earth and calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; substances that confer thermal conductivity, such as alumina, boron nitride, silicon carbide and metal powders; and substances that confer electrical conductivity, such as carbon black, silver powder and conductive zinc oxide.

Adhesion promoters such as carboxylic anhydrides and titanic acid esters, tackifiers other than component (D) and/or silane coupling agents may also be added to the inventive composition.

Adhesive Composition

The adhesive composition of the invention can be prepared by uniformly mixing above components (A) to (D) and other optional ingredients using a suitable mixing apparatus, such as a planetary mixer, Ross mixer or Hobart mixer, and using also, if necessary, an apparatus for intimately working the mixture, such as a kneader or a three-roll mill.

No particular limitation is imposed on the method for preparing the curable compositions of the invention. For example, preparation may involve blending all of the components together. Alternatively, the components may be prepared as two separate compositions, which are then mixed at the time of use.

Depending on the functional groups on the linear perfluoropolyether compound (A) and the type of catalyst (C), the resulting adhesive composition will cure at room temperature. However, heating is desirable to promote curing. In particular, to achieve good adhesion to various types of substrates, the composition is preferably cured by heating at a temperature of at least 60°C, and preferably 100 to 200°C, for a period of from several minutes to several hours.

Depending on the particular application and purpose of use, the adhesive composition of the invention may be used in solution form. Specifically, prior to use, the composition is dissolved in a suitable fluorochemical solvent, such as 1,3-bis(trifluoromethyl)benzene, Fluorinate (available from 3M Corporation), perfluorobutyl methyl ether or perfluorobutyl ethyl ether to the desired concentration. The use of a solvent is especially preferred in thin-film coating applications.

The adhesive compositions of the invention are useful as adhesives for various types of electrical and electronic components. For example, the adhesive compositions are highly suitable as adhesives for ink jet printers, adhesives and sealants for printer heads, coatings for rolls and belts in laser printers and copiers, and adhesive sealants and coatings for various types of circuit boards.

EXAMPLE

Examples of the invention and comparative examples are given below by way.of illustration and not by way of limitation. All parts are by weight. Properties such as viscosity and bond strength are as measured at 23°C in accordance with JIS K6249.

Example 1

A polymer of formula (12) below (designated "Polymer Q," viscosity 10,000 mPa·s, vinyl group content 0.012 mol/100 g) was subjected to Treatment 2 below to form a polymer (designated "Polymer S," viscosity 11,000 mPa·s, vinyl group content 0.012 mol/100 g). To 100 parts of Polymer S were added 0.20 part of a toluene solution of platinum-divinyltetramethyldisiloxane complex (platinum concentration 0.5 wt%), 0.30 part of a 50% toluene solution of ethynyl cyclohexanol, 11.4 parts of a compound of formula (13) below (Si-H group content 0.063 mol/100 g), 3.84 parts of a compound of formula (14) below (Si-H group content 0.219 mol/100 g), and 14.9 parts of a compound of formula (15). The ingredients were mixed into a composition.

Polymer Q

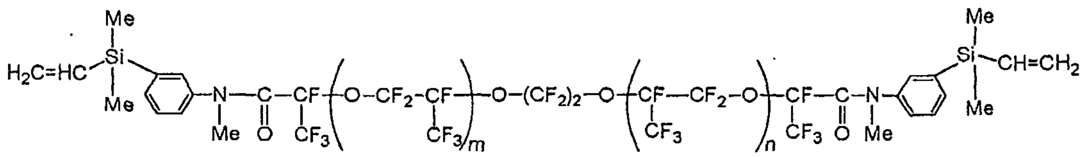

(12)

$\overline{m+n} = 90$

Treatment 2

Polymer Q was vacuum heat treated at 270 Pa and 180°C for 8 hours.

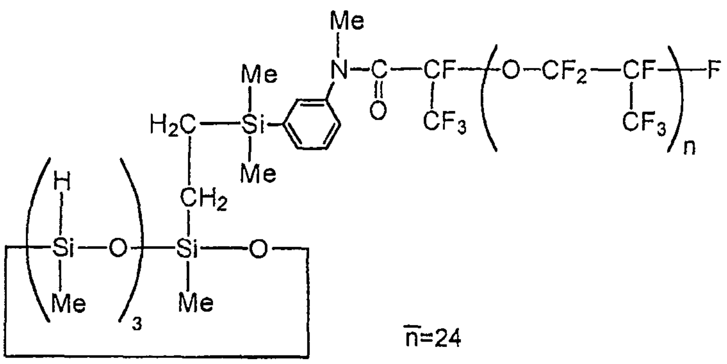

(13)

$\overline{n}=24$

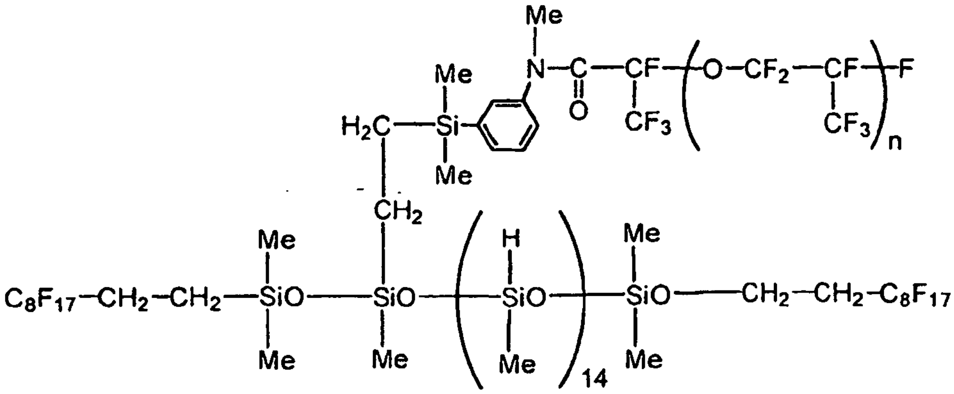

(14)

$\bar{n}=24$

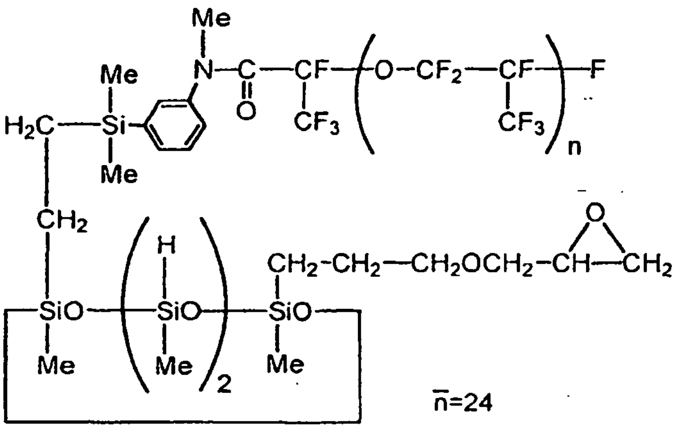

(15)

$\bar{n}=24$

The weight loss of Polymer Q, Polymer S or the compounds of formulae (13) to (15) was determined as follows.

First, the tare weight ($W_1$) of a clean aluminum dish is measured using a precision balance (reading limit 0.1 mg). A sample of test material is then placed on the dish, and the weight ($W_2$) of the sample-containing aluminum dish is measured using the precision balance. The sample-containing aluminum dish is held in a thermostat oven at 105°C for 3 hours. After heating, the aluminum dish is taken out of the oven and allowed to cool down in a desiccator. After cooling, the weight ($W_3$) of the sample-containing aluminum dish is measured again using the precision balance. Then the percent weight loss of this sample is computed according to the formula:

$$[(W_3-W_1)/(W_2-W_1)] \times 100\% .$$

$W_1$: weight (g) of aluminum dish
$W_2$: weight (g) of aluminum dish + sample prior to heating
$W_3$: weight (g) of aluminum dish + heated sample

The weight loss of Polymer Q, Polymer S and the compounds of formulae (13) to (15) as determined above is shown in Table 1.

Next, an outgassing test was carried out on the composition for determining whether or not it yielded outgassing upon heat curing.

As a blank, a clean silicon wafer of 20 mm square was placed in a clean glass dish, which was closed with a lid and held in a thermostat oven at 150°C for one hour. After heating, the glass dish was taken out of the oven and allowed to cool down in a desiccator for 3 hours. After cooling, the silicon wafer was taken out of the glass dish and measured for contact angle with deionized water. The result is shown in Table 2.

Next, a clean silicon wafer of 20 mm square was placed in a clean glass dish and in contact with 10 g of the

composition of Example 1. After the same heating and cooling steps as above, the silicon wafer was measured for contact angle with deionized water. The result is shown in Table 2.

If the composition yields outgassing upon heat curing, the gases deposit on the silicon wafer surface whereby the contact angle of the silicon wafer with deionized water becomes significantly larger than the blank. If the contact angle is substantially equal to the blank, the composition can be judged as yielding little or no outgassing upon heat curing.

Example 2

A composition was prepared as in Example 1 except that 15.3 parts of a compound of formula (16) below was used instead of the compound of formula (15) in Example 1. The weight loss of the compound of formula (16) was determined as in Example 1, with the result being also shown in Table 1. The composition was tested as in Example 1, with the result being also shown in Table 1.

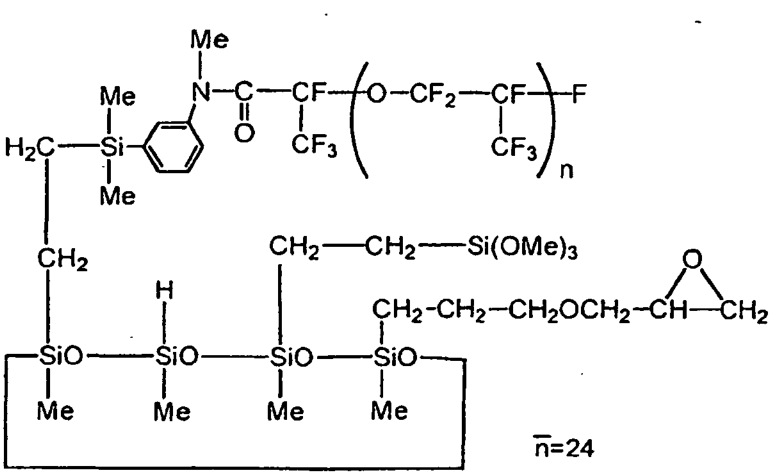

(16)

Example 3

A composition was prepared as in Example 1 except that 15.0 parts of a compound of formula (17) below was used instead of the compound of formula (15) in Example 1. The weight loss of the compound of formula (17) was determined as in Example 1, with the result being also shown in Table 1. The composition was tested as in Example 1, with the result being also shown in Table 1.

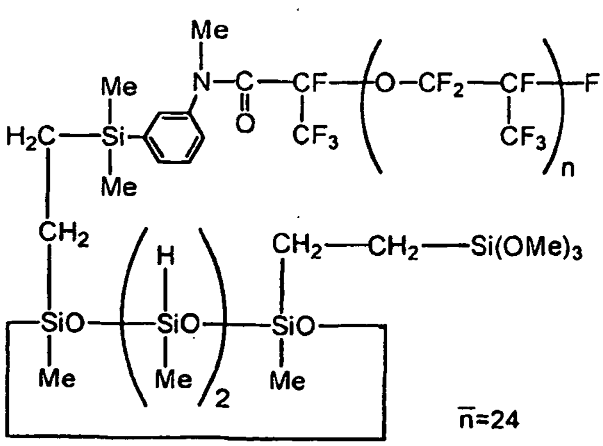

(17)

Comparative Example 1

A composition was prepared as in Example 1 except that 100 parts of Polymer Q was used instead of Polymer S, 1.66 parts of a compound of formula (18) below (Si-H group content 0.429 mol/100 g) was used instead of the

compound of formula (13), 1.05 parts of a compound of formula (19) below (Si-H group content 0.821 mol/100 g) was used instead of the compound of formula (14), and 2.50 parts of a compound of formula (20) below was used instead of the compound of formula (15). The weight loss of the compounds of formulae (18) to (20) was determined as in Example 1, with the results being also shown in Table 1. The composition was tested as in Example 1, with the result being also shown in Table 1.

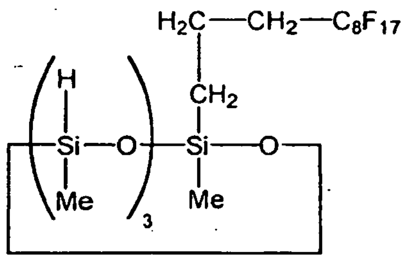
(18)

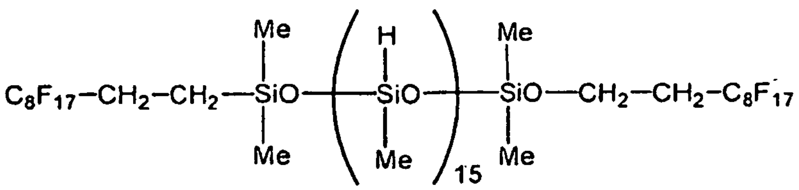
(19)

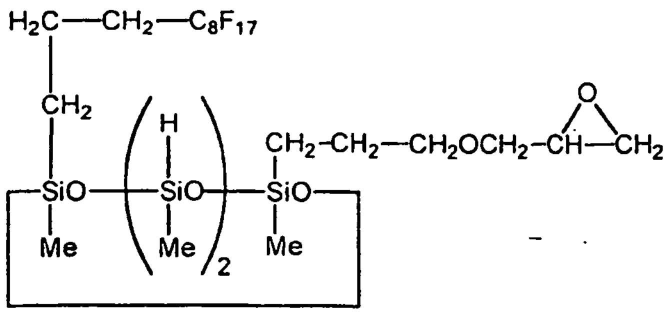
(20)

Table 1

| Material | Weight loss (%) |
|---|---|
| Polymer Q | 0.5 |
| Polymer S | 0.1 |
| Compound (13) | 0.2 |
| Compound (14) | 0.1 |
| Compound (15) | 0.2 |
| Compound (16) | 0.2 |
| Compound (17) | 0.2 |
| Compound (18) | 28.5 |
| Compound (19) | 3.2 |
| Compound (20) | 24.6 |

It is noted that Compound (13) represents the compound of formula (13), and so forth.

Table 2

| | Example | | | Comparative Example |
|---|---|---|---|---|
| | 1 | 2 | 3 | 1 |
| Contact angle (°) | 26 | 25 | 26 | 96 |

Next, adhesion test specimens were prepared by sandwiching a 1 mm thick layer of the composition obtained in Examples 1-3 and Comparative Example 1 between 100x25 mm test panels of the various types of adherends shown in Table 3 arranged with an overlap between their respective edges of 10 mm, and heating at 150°C for 1 hour to cure the composition. These specimens were then subjected to tensile-shear strength tests (pulling rate, 50 mm/min), and the bond strength (shear bond strength) and cohesive failure rate were evaluated. The results are shown in Table 3.

Table 3

| Shear strength ($kgf/cm^2$) | Example | | | Comparative Example |
|---|---|---|---|---|
| | 1 | 2 | 3 | 1 |
| Glass | 5.4 (100) | 5.7 (100) | 5.5 (100) | 5.5 (100) |
| Aluminum | 6.5 (100) | 6.9 (100) | 6.6 (100) | 6.4 (100) |
| Stainless steel | 5.9 (100) | 6.5 (100) | 6.3 (100) | 6.3 (100) |
| Polyester | 3.6 (100) | 3.8 (100) | 3.6 (100) | 3.5 (100) |
| Epoxy resin | 4.3 (100) | 4.9 (100) | 4.7 (100) | 4.7 (100) |
| Values in parenthesis ( ) indicate cohesive failure rate in percent of surface area. | | | | |

**Claims**

**1.** An adhesive composition consisting of

(A) 100 parts by weight of a linear perfluoropolyether compound containing at least two alkenyl groups per molecule and which has been subjected to vacuum treatment at a temperature of 100 to 300°C at a pressure of up to 1330 Pa for at least 1 hour and exhibits a weight loss of up to 0.3% during this treatment,
(B) a fluorinated organohydrogensiloxane containing at least two silicon atom-bonded hydrogen atoms per molecule and having a weight loss of up to 2.0%, in an amount to provide 0.5 to 3.0 moles of Si-H groups per mole of alkenyl groups in component (A),
(C) 0.1 to 500 ppm of a platinum group compound, calculated as platinum group metal atoms on the basis of the weight of component (A),
(D) 1 to 50 parts by weight of an organosiloxane containing per molecule at least one hydrogen atom directly bonded to a silicon atom and at least one group selected from among epoxy and trialkoxysilyl groups which is bonded to a silicon atom through a carbon atom or carbon and oxygen atoms and having a weight loss of up to 2.0%, and
optionally (E) one or more ingredients selected from

i) plasticizers, viscosity modifiers and flexibilizers
which have been subjected to vacuum treatment at a temperature of 100 to 300°C at a pressure of up to 1330 Pa for at least 1 hour;
ii) hydrosilylation catalyst regulators;
iii) inorganic fillers;
iv) adhesion promoters; and
v) silane coupling agents

**2.** The adhesive composition of claim 1, wherein the linear perfluoropolyether compound (A) has an alkenyl content

of 0.002 to 0.3 mol/100 g.

3. The adhesive composition of claim 1 or 2, wherein the linear perfluoropolyether compound (A) is of the general formula (1):

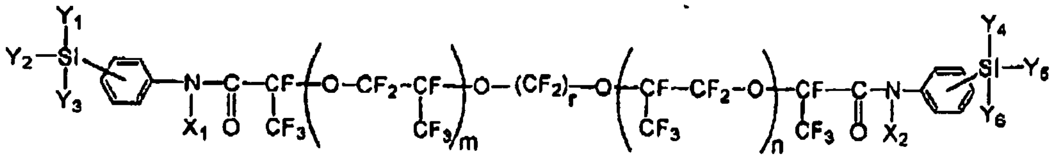

(1)

wherein $X^1$ and $X^2$ each are hydrogen, methyl, phenyl or aryl, at least two of $Y^1$, $Y^2$, $Y^3$, $Y^4$, $Y^5$ and $Y^6$ are alkenyl groups, the remaining groups are substituted or unsubstituted monovalent hydrocarbon groups, r is an integer of 2 to 6, m and n are an integer of 0 to 200, and the sum of m and n is 0 to 400.

4. The adhesive composition of any one of claims 1 to 3, wherein the fluorinated organohydrogensiloxane (B) contains at least one monovalent perfluoroalkyl, monovalent perfluorooxyalkyl, divalent perfluoroalkylene or divalent perfluorooxyalkylene group per molecule.

5. The adhesive composition of any one of claims 1 to 4, wherein the organosiloxane (D) further contains at least one monovalent perfluoroalkyl or monovalent perfluorooxyalkyl group which is bonded to a silicon atom through a carbon atom or carbon and oxygen atoms.

6. A method of forming an adhesive composition as defined in any one of claims 1 to 5, wherein component (A) is a component of formula (1)

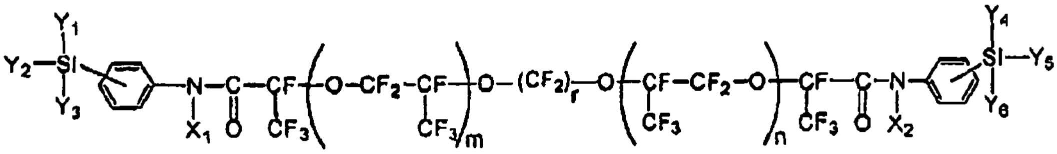

(1)

the method comprising the steps of

i) subjecting the linear perfluoropolyether of formula (1) to vacuum treatment at a temperature of 100 to 300°C at a pressure of up to 1330 Pa for at least 1 hour; and
ii) uniformly mixing the vacuum-treated linear perfluoropolyether of formula (1) with components (B), (C), (D) and any optional components (E).

7. A printing or copying machine in which the adhesive composition of any one of claims 1 to 5 or adhesive composition formed by the method of claim 6 is used as protective sealant or coating.

8. The printing or copying machine of claim 7 which is an ink jet printer or a laser printer.

9. A component for a printing or copying machine, in which component the adhesive composition of any one of claims 1 to 5 or adhesive composition formed by the method of claim 6 is used as a protective sealant or coating.

10. The component of claim 9 which is a roller or belt for a printer or copier.

## Patentansprüche

1. Klebstoffzusammensetzung, bestehend aus:

(A) 100 Gewichtsteilen einer unverzweigten Perfluorpolyetherverbindung, die zumindest zwei Alkenylgruppen pro Molekül enthält und einer zumindest 1-stündigen Vakuumbehandlung bei einer Temperatur von 100 bis 300 °C und unter einem Druck von bis zu 1330 Pa unterzogen worden ist und während dieser Behandlung einen Gewichtsverlust von bis zu 0,3 % erfährt,
(B) ein fluoriertes Organohydrogensiloxan, das zumindest zwei Siliciumatomgebundene Wasserstoffatome pro Molekül aufweist und einen Gewichtsverlust von bis zu 2,0 % erfährt, in einer Menge, um 0,5 bis 3,0 Mol Si-H-Gruppen pro Mol der Alkenylgruppen in Komponente (A) bereitzustellen,
(C) 0,1 bis 500 ppm einer Platingruppenverbindung, berechnet als Platingruppenmetallatome bezogen auf das Gewicht von Komponente (A),
(D) 1 bis 50 Gewichtsteile eines Organosiloxans, das pro Molekül zumindest ein direkt an ein Siliciumatom gebundenes Wasserstoffatom und zumindest eine aus Epoxy- und Trialkoxysilylgruppen ausgewählte Gruppe aufweist, die über ein Kohlenstoffatom oder über Kohlenstoff- und Sauerstoffatome an ein Siliciumatom gebunden sind, und das einen Gewichtsverlust von bis zu 2,0 % zeigt, und
gegebenenfalls (E) einen oder mehrere Bestandteile, die ausgewählt sind aus:

i) Weichmachern, Viskositätsmodifikatoren und Plastifikatoren, die einer zumindest 1-stündigen Vakuumbehandlung bei einer Temperatur von 100 bis 300 °C und unter einem Druck von bis zu 1330 Pa unterzogen worden sind;
ii) Hydrosilylierungskatalysatorregler;
iii) Haftverstärker; und
iv) Silanhaftvermittler.

2. Klebstoffzusammensetzung nach Anspruch 1, worin die unverzweigte Perfluorpolyetherverbindung (A) einen Alkenylgehalt von 0,002 bis 0,3 mol/100 g aufweist.

3. Klebstoffzusammensetzung nach Anspruch 1 oder 2, worin die unverzweigte Perfluorpolyetherverbindung (A) die folgende Formel (1) aufweist:

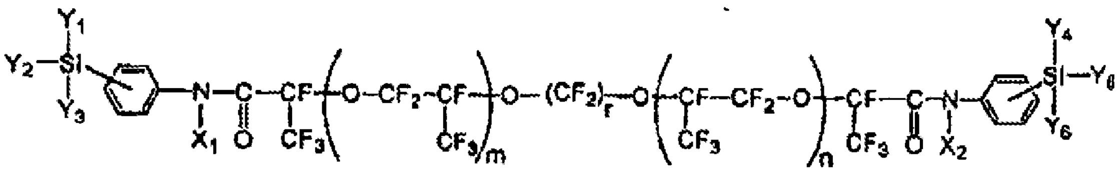
(1)

worin $X_1$ und $X_2$ jeweils Wasserstoff, Methyl, Phenyl oder Aryl sind, zumindest zwei von $Y_1$, $Y_2$, $Y_3$, $Y_4$, $Y_5$ und $Y_6$ Alkenylgruppen sind, die übrigen Gruppen substituierte oder unsubstituierte einwertige Kohlenwasserstoffgruppen sind, r eine ganze Zahl von 2 bis 6 ist, m und n ganze Zahlen von 0 bis 200 sind und die Summe m + n = 0 bis 400 ist.

4. Klebstoffzusammensetzung nach einem der Ansprüche 1 bis 3, worin das fluorierte Organohydrogensiloxan (B) zumindest eine einwertige Perfluoralkyl-, einwertige Perfluoroxyalkyl-, zweiwertige Perfluoralkylen- oder zweiwertige Perfluoroxyalkylengruppe pro Molekül enthält.

5. Klebstoffzusammensetzung nach einem der Ansprüche 1 bis 4, worin das Organosiloxan (D) weiters zumindest eine einwertige Perfluoralkyl- oder einwertige Perfluoroxyalkylgruppe umfasst, die über ein Kohlenstoffatom oder Kohlenstoff- und Sauerstoffatome an ein Siliciumatom gebunden ist.

6. Verfahren zur Herstellung einer Klebstoffzusammensetzung nach einem der Ansprüche 1 bis 5, worin die Komponente (A) eine Komponente der Formel (1) ist:

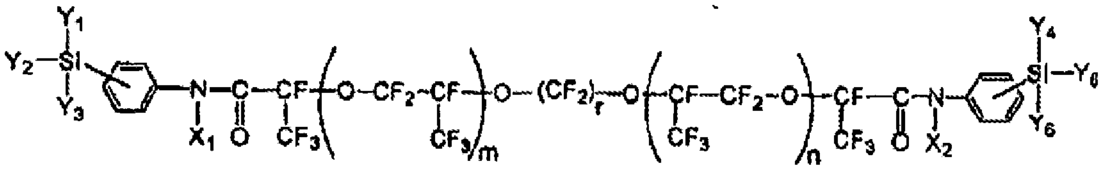

(1)

und das Verfahren folgende Schritte umfasst:

i) das Unterziehen des unverzweigten Perfluorpolyethers der Formel (1) einer zumindest 1-stündigen Vakuumbehandlung bei einer Temperatur von 100 bis 300 °C und unter einem Druck von bis zu 1330 Pa; und
ii) das gleichförmige Vermischen des vakuumbehandelten unverzweigten Perfluorpolyethers der Formel (1) mit den Komponenten (B), (C), (D) und etwaiger optionaler Komponenten (E).

**7.** Druck- oder Kopiergerät, worin eine Klebstoffzusammensetzung nach einem der Ansprüche 1 bis 5 oder eine Klebstoffzusammensetzung, die durch ein Verfahren nach Anspruch 6 hergestellt worden ist, als Schutzdichtungsmaterial oder Schutzbeschichtung verwendet wird.

**8.** Druck- oder Kopiergerät nach Anspruch 7, das ein Tintenstrahldrucker oder ein Laserdrucker ist.

**9.** Komponente für ein Druck- oder Kopiergerät, wobei die Komponente eine Klebstoffzusammensetzung nach einem der Ansprüche 1 bis 5 oder eine Klebstoffzusammensetzung, die durch ein Verfahren nach Anspruch 6 hergestellt worden ist, als Schutzdichtungsmaterial oder Schutzbeschichtung verwendet wird.

**10.** Komponente nach Anspruch 9, die eine Walze oder ein Band für einen Drucker oder Kopierer ist.

## Revendications

**1.** Composition adhésive constituée de

(A) 100 parties en poids d'un composé perfluoropolyéther linéaire contenant au moins deux groupes alcényle par molécule et qui a été soumis à un traitement sous vide à une température de 100 à 300°C et sous une pression allant jusqu'à 1330 Pa pendant au moins 1 heure et qui présente une perte de poids allant jusqu'à 0,3 % durant ce traitement,
(B) un organohydrogénosiloxane fluoré contenant au moins deux atomes d'hydrogène liés à l'atome de silicium par molécule et ayant une perte de poids allant jusqu'à 2,0 %, en une quantité donnant 0,5 à 3,0 moles de groupes Si-H par mole de groupes alcényle dans le composant (A),
(C) 0,1 à 500 ppm d'un composé du groupe du platine, calculées en atomes de métal du groupe du platine par rapport au poids du composant (A),
(D) 1 à 50 parties en poids d'un organosiloxane contenant, par molécule, au moins un atome d'hydrogène directement lié à un atome de silicium et au moins un groupe, choisi parmi les groupes époxy et trialcoxysilyle, qui est lié à un atome de silicium par l'intermédiaire d'un atome de carbone ou d'atomes de carbone et d'oxygène et ayant une perte de poids allant jusqu'à 2,0 %, et
éventuellement (E) un ou plusieurs ingrédients choisis parmi

i) les plastifiants, les modificateurs de viscosité et les flexibilisants, qui ont été soumis à un traitement sous vide à une température de 100 à 300°C et sous une pression allant jusqu'à 1330 Pa pendant au moins 1 heure ;
ii) les régulateurs de catalyseurs d'hydrosilylation ;
iii) les charges inorganiques ;
iv) les promoteurs d'adhérence ; et
v) les agents de couplage au silane.

**2.** Composition adhésive selon la revendication 1, dans laquelle le composé perfluoropolyéther linéaire (A) a une teneur en alcényle de 0,002 à 0,3 mole/100 g.

**3.** Composition adhésive selon la revendication 1 ou 2, dans laquelle le composé perfluoropolyéther linéaire (A) répond à la formule générale (1) :

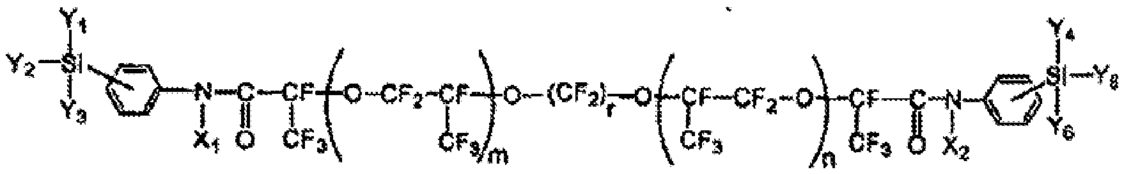

(1)

dans laquelle chacun de $X^1$ et $X^2$ est l'hydrogène, méthyle, phényle ou aryle, au moins deux de $Y^1$, $Y^2$, $Y^3$, $Y^4$, $Y^5$ et $Y^6$ sont des groupes alcényle, les groupes restants étant des groupes hydrocarbonés monovalents substitués ou non substitués, r est un entier de 2 à 6, m et n sont des entiers de 0 à 200, et la somme de m et n vaut de 0 à 400.

**4.** Composition adhésive selon l'une quelconque des revendications 1 à 3, dans laquelle l'organohydrogénosiloxane fluoré (B) contient au moins un groupe perfluoroalkyle monovalent, perfluorooxyalkyle monovalent, perfluoroalkylène divalent ou perfluorooxyalkylène divalent par molécule.

**5.** Composition adhésive selon l'une quelconque des revendications 1 à 4, dans laquelle l'organosiloxane (D) contient en outre au moins un groupe perfluoroalkyle monovalent ou perfluorooxyalkyle monovalent qui est lié à un atome de silicium par l'intermédiaire d'un atome de carbone ou d'atomes de carbone et d'oxygène.

**6.** Procédé pour former une composition adhésive telle que définie dans l'une quelconque des revendications 1 à 5, dans lequel le composant (A) est un composant de formule (1)

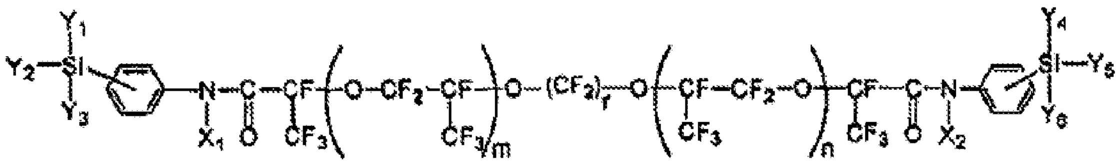

(1)

lequel procédé comprend les étapes consistant à

i) soumettre le perfluoropolyéther linéaire de formule (1) à un traitement sous vide à une température de 100 à 300°C et sous une pression allant jusqu'à 1330 Pa pendant au moins 1 heure ; et
ii) mélanger uniformément le perfluoropolyéther linéaire de formule (1) traité sous vide avec les composants (B), (C), (D), et n'importe quels composants facultatifs (E).

**7.** Machine d'impression ou de copie dans laquelle la composition adhésive de l'une quelconque des revendications 1 à 5 ou la composition adhésive formée par le procédé de la revendication 6 est utilisée en tant que produit d'étanchéité ou revêtement protecteur.

**8.** Machine d'impression ou de copie selon la revendication 7, qui est une imprimante à jet d'encre ou une imprimante à laser.

**9.** Composant pour machine d'impression ou de copie, dans lequel la composition adhésive de l'une quelconque des revendications 1 à 5 ou la composition adhésive formée par le procédé de la revendication 6 est utilisée en tant que produit d'étanchéité ou revêtement protecteur.

**10.** Composant selon la revendication 9, qui est un rouleau ou une courroie pour imprimante ou copieur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9095615 A